# EUROPEAN PATENT APPLICATION

(11) **EP 4 650 536 A1**
(43) Date of publication of application: **19.11.2025**
(21) Application number: 24188495.6
(22) Date of filing: 14.07.2024
(51) Int. Cl.: E03C 1/02, E03C 1/04, E03C 1/06, F16L 37/098, F16L 37/084

(54) **CONNECTING STRUCTURE AND WATER OUTLET DEVICE**

(30) Priority: 15.05.2024 CN 202410603166
(71) Applicant: Fujian Xihe Sanitary Ware Technology Co., Ltd., QuanZhou, Fujian 362304 (CN)
(72) Inventor: LIN, Xiaofa, QuanZhou, 362304 (CN); LIN, Xiaoshan, QuanZhou, 362304 (CN); YU, Kaishi, QuanZhou, 362304 (CN); PAN, Longjiang, QuanZhou, 362304 (CN); LIU, Huaran, QuanZhou, 362304 (CN); LIU, Qiqiao, QuanZhou, 362304 (CN); DENG, Xiaoqing, QuanZhou, 362304 (CN)
(74) Representative: Argyma

(57) **Abstract**

A connecting structure comprising a connecting member (1), a snap-fit member (2) having an outer wall provided with a bulge (23) and an inner wall provided with a second rotation-stopping portion (24), the second rotation-stopping portion (24) being suitable to be in a rotation-stopping fit with the first rotation-stopping portion (111), and the bulge (23) being suitable to deform along a radial direction of the snap-fit member (2); and a sleeving member (3), provided with a snap-fit hole (31) and sleeved on the snap-fit member (2) and the connecting member (1) such that the bulge (23) deforms inward, the bulge (23), when being aligned to the snap-fit hole (31), springing back outward and extending into the snap-fit hole (31) when being aligned to the snap-fit hole (31), so as to be in a snap fit with the snap-fit hole (31).

## Description

### TECHNICAL FIELD

The disclosure relates to the field of water outlet products, and in particular to a connecting structure and a water outlet device.

### Description of Related Art

In the prior art, a faucet includes a water outlet member, a water passing member and a screw. The water passing member is provided with a threaded hole, and the water outlet member is provided with a via hole. The water outlet member is sleeved on the water passing member, such that the threaded hole is aligned with the via hole, and is in threaded connection with the threaded hole after running through the via hole and abuts against the water outlet member such that the water outlet member, the water passing member and the screw are fixed relative to each other. However, the faucet in the prior art is not convenient to assemble and disassemble.

### SUMMARY

The purpose of the disclosure is to overcome the defect or problem in the related art by providing a connecting structure and a water outlet device.

To achieve the above purpose, the present disclosure and preferred embodiments thereof adopt the following technical solutions, but the embodiments are not limited to the following solutions:

In a first solution, a connecting structure includes:
a connecting member, provided with an annular groove having an opening in a sidewall of the connecting member and being provided around a first axis, a sidewall of the annular groove facing the opening being provided with a first rotation-stopping portion;
a snap-fit member, suitable to be mounted in and limited to the annular groove along a first direction, and having an outer wall provided with a bulge and an inner wall provided with a second rotation-stopping portion, the second rotation-stopping portion being suitable to be in a rotation-stopping fit with the first rotation-stopping portion, and the bulge being suitable to deform along a radial direction of the snap-fit member; and
a sleeving member, provided with a snap-fit hole and sleeved on the snap-fit member and the connecting member such that the bulge deforms inward, the bulge springing back outward and extending into the snap-fit hole when being aligned to the snap-fit hole so as to be in a snap fit with the snap-fit hole.

In a second solution based on the first solution, the connecting member is provided with a threaded section suitable to be in threaded connection with an external object. The first rotation-stopping portion includes a plurality of rotation-stopping grooves extending along a direction parallel with the first axis. Each of the rotation-stopping grooves is provided around the first axis. The second rotation-stopping portion is provided with at least one rotation-stopping protrusion. The rotation-stopping protrusion is suitable to enter or exit from each of the rotation-stopping grooves. The rotation-stopping grooves are provided continuously or at intervals.

In a third solution based on the second solution, at least one of the rotation-stopping groove and the rotation-stopping protrusion is provided with a guiding slope such that the rotation-stopping protrusion could exit from or enter the rotation-stopping groove when the snap-fit member is suitable to rotate around the first axis.

In a fourth solution based on the second solution or the third solution, the snap-fit member is provided with a deformation hole along the radial direction of the snap-fit member, and the deformation hole is suitable to expand such that the snap-fit member is suitable to be arranged in the annular groove, and the deformation hole is suitable to contract so as to complete mounting of the snap-fit member and the annular groove. The sleeving member is sleeved on the snap-fit member and prevents the deformation hole from expanding.

In a fifth solution based on the fourth solution, the snap-fit member is suitable to rotate around the first axis such that the rotation-stopping protrusion could exit from or enter the rotation-stopping groove, and when the rotation-stopping protrusion exits from the rotation-stopping groove, the deformation hole expands.

In a sixth solution based on the first solution, the snap-fit member is provided with an avoidance hole, and one end of the bulge is connected with a wall of the avoidance hole such that a free end of the bulge is a cantilever relative to the avoidance hole. The free end of the bulge is suitable to be in a snap fit with the snap-fit hole.

In a seventh solution based on the first solution, the connecting structure further includes a gasket. The connecting member is provided with a gasket groove provided around the first axis. The gasket is arranged in the gasket groove and provided with an abutting surface facing the sleeving member, and the sleeving member is sleeved on the snap-fit member and abuts against the abutting surface.

In an eighth solution, a water outlet device includes a mounting member and a connecting structure according to any of the first solution to the seventh solution. A connecting member is provided with a water passing channel, and a sleeving member is provided with a water outlet channel communicating with the water passing channel. The connecting member is suitable to be connected with the mounting member, and the mounting member is provided with a water through channel communicating with the water passing channel.

In a ninth solution based on the eighth solution, the water outlet device further includes a sealing ring. The connecting member is provided with a sealing groove, and the sealing ring is arranged in the sealing groove. The sleeving member is sleeved on the connecting member, and inner and outer rings of the sealing ring respectively abut against a wall of the sealing groove and the sleeving member.

In a tenth solution based on the eighth solution, the water outlet device includes a temperature valve and a switch valve. The mounting member is further provided with a cold water channel, a hot water channel, a first valve cavity and a second valve cavity. The first valve cavity communicates with the cold water channel, the hot water channel and the second valve cavity. The second valve cavity communicates with the water through channel. The temperature valve is detachably arranged in the first valve cavity. Two water inlet ends of the temperature valve respectively communicate with the cold water channel and the hot water channel, and a water outlet end of the temperature valve communicates with a water inlet end of the switch valve. The switch valve is detachably arranged in the second valve cavity and is suitable to change a water passing flow rate of the water through channel. The temperature valve is one of a mechanical temperature regulating valve core, a thermostatic valve core or an ordinary ceramic valve core. The mounting member is further provided with a lower water outlet hole. The lower water outlet hole communicates with the second valve cavity, and the switch valve is suitable to change a water passing flow rate of the water through channel and the lower water outlet hole.

In an eleventh solution based on the tenth solution, the mounting member is integrally injection-molded. The first valve cavity has an opening on one side of the mounting member, and an opening direction of the first valve cavity is perpendicular to the first axis. The second valve cavity has an opening on one side of the mounting member, and an opening direction of the second valve cavity is perpendicular to the first axis and the opening direction of the first valve cavity.

In a twelfth solution based on the tenth solution, the water outlet device further includes a housing. The housing is provided with an inner cavity. The hot water channel of the mounting member is arranged in the inner cavity, and there is a clearance between an outer wall of the hot water channel and the inner cavity.

In a thirteenth solution based on the eighth solution, the sleeving member includes a fixing member, a first member and a second member. The first member is suitable to be sleeved on a snap-fit member and the connecting member and is provided with a snap-fit hole, and the second member is suitable to slide relative to the first member along a vertical direction. The fixing member is suitable to act on the first member and the second member to keep the second member fixed relative to the first member. The first member and the second member are suitable to jointly form the water outlet channel, and a water outlet end of the water outlet channel is located at the second member.

In a fourteenth solution based on the thirteenth solution, the fixing member includes a fitting member and a threaded member, and the first member is provided with an insertion hole for insertion of the second member. There is a first gap between a wall of the insertion hole and an outer wall of the second member. An opening end of the insertion hole and/or the fitting member is provided with a slope such that the fitting member is fitted with the insertion hole through the slope, and thus, the fitting member is suitable to enter or exit from the first gap. The threaded member is provided with a pushing portion and suitable to be in threaded connection with an outer wall of the first member. The pushing portion is suitable to push against a side of the fitting member facing away from the first member when the threaded member is being threadedly connected to the first member, such that the fitting member gradually extends into the insertion hole and enters the first gap. When the pushing portion is away from the insertion hole, the fitting member is suitable to exit from the first gap by means of its own elasticity.

In a fifteenth solution based on the ninth solution, the connecting member is suitable to be in threaded connection with the mounting member.

As can be seen from the above description of the disclosure and preferred embodiments thereof, compared with the prior art, the technical solutions of the disclosure and preferred embodiments thereof have the following beneficial effects due to the adoption of the following technical means:
1. In the first solution and preferred embodiments thereof, the connecting structure includes the connecting member, the snap-fit member and the sleeving member. The connecting member is provided with the annular groove having the opening in the sidewall of the connecting member and being provided around the first axis, and the snap-fit member is suitable to be mounted in and limited to the annular groove along the first direction, such that the snap-fit member cannot move relative to the connecting member along the first direction. The sidewall of the annular groove facing the opening is provided with the first rotation-stopping portion. The inner wall of the snap-fit member is provided with the second rotation-stopping portion, and the second rotation-stopping portion is suitable to be in a rotation-stopping fit with the first rotation-stopping portion, thereby preventing the snap-fit member from rotating relative to the connecting member around the axis extending along the first direction. The sleeving member is sleeved on the snap-fit member and the connecting member, and is provided with a snap-fit hole, and the outer wall of the snap-fit member is provided with the bulge. The bulge is suitable to deform along the radial direction of the snap-fit member so as to be fitted with the snap-fit hole, and the bulge is suitable to extend into the snap-fit hole such that the snap-fit hole is in a snap fit with the bulge, so that the sleeving member cannot incidentally rotate relative to the snap-fit member or sway along the first direction. When the assembly is completed, in a case that the sleeving member, the snap-fit member and the connecting member are in normal use, there is no relative movement, thereby ensuring the stability during use. In this way, the user can realize the assembly and disassembly merely with hands and a screwdriver is unneeded, which is convenient. During mounting, the sleeving member is sleeved on the snap-fit member and the connecting member such that the bulge deforms inward, and the bulge, when being aligned to the snap-fit hole, springs back outward and extends into the snap-fit hole so as to be in a snap fit with the snap-fit hole.
2. In the second solution and preferred embodiments thereof, the connecting member is provided with the threaded section suitable to be in threaded connection with an external object (such as the mounting member), so as to realize the mounting. If the first rotation-stopping portion or the second rotation-stopping portion includes only one rotation-stopping structure, such as only one rotation-stopping groove or only one rotation-stopping protrusion, then when the assembly of the connecting member and the external object is completed, the first rotation-stopping portion may possibly be at a position that the user does not desire, such that the positions of the snap-fit member and the snap-fit hole also change accordingly, which may affect other needs of the user such as the aesthetic needs. In this embodiment, the first rotation-stopping portion includes the plurality of rotation-stopping grooves extending along the direction parallel with the first axis, and each of the rotation-stopping grooves is provided around the first axis. The second rotation-stopping portion is provided with the at least one rotation-stopping protrusion. The rotation-stopping protrusion could enter or exit from each of the rotation-stopping grooves. Due to the arrangement of the multi-stage rotation-stopping structure, the user can adjust the mounting position of the snap-fit member appropriately so as to have a greater degree of freedom in mounting. The rotation-stopping grooves are provided at intervals, so the structure is simpler. The rotation-stopping grooves are provided continuously, which compared with the rotation-stopping grooves 1111 provided at intervals, provides a wider adjustment range, thereby facilitating the adjustment of the user.
3. In the third solution and preferred embodiments thereof, at least one of the rotation-stopping groove and the rotation-stopping protrusion is provided with the guiding slope so that the rotation-stopping protrusion could exit from or enter the rotation-stopping groove when the snap-fit member is suitable to rotate around the first axis. In this way, the rotation-stopping protrusion can exit from or enter the rotation-stopping groove by rotating the snap-fit member, and the position of the bulge can be adjusted without detaching the snap-fit member from the connecting member and reinstalling the snap-fit member to the connecting member, which is convenient to operate.
4. In the fourth solution and preferred embodiments thereof, the snap-fit member is provided with the deformation hole along the radial direction thereof, and the deformation hole could expand such that the snap-fit member is suitable to be arranged in the annular groove, and the deformation hole 21 is suitable to contract so as to complete the mounting of the snap-fit member and the annular groove. In this way, it is easy to mount the snap-fit member and limit the relative position of the snap-fit member and the annular groove along the first direction. The sleeving member is sleeved on the snap-fit member and prevents the deformation hole from expanding, thereby preventing the deformation hole of the snap-fit member from expanding incidentally and thus preventing the snap-fit member from being separating from the connecting member.
5. In the fifth solution and preferred embodiments thereof, the snap-fit member is suitable to rotate around the first axis such that the rotation-stopping protrusion could exit from or enter the rotation-stopping groove. In this case, if the snap-fit member is ring-shaped without the deformation hole, it is required to apply a large force to make the rotation-stopping protrusion deform to exit from the rotation-stopping groove. In this embodiment, due to the presence of the deformation hole, when the rotation-stopping protrusion exits from the rotation-stopping groove, the deformation hole expands, so that the rotation-stopping protrusion could exit from the rotation-stopping groove by applying a small force, which is convenient for adjustment.
6. In the sixth solution and preferred embodiments thereof, the snap-fit member is provided with the avoidance hole, and one end of the bulge is connected with the wall of the avoidance hole. The free end of the bulge is suitable to be in a snap fit with the snap-fit hole such that the free end of the bulge is a cantilever relative to the avoidance hole, which makes the deformation of the bulge easier.
7. In the seventh solution and preferred embodiments thereof, if the bottom surface of the sleeving member contacts a hard material in the process of sleeving the sleeving member, the sleeving member may interfere with the hard material during mounting due to the fabrication tolerance, which makes the bulge incapable of being perfectly fitted with the snap-fit hole. In this embodiment, the gasket provided with the abutting surface is arranged, and the sleeving member is sleeved on the snap-fit member and abuts against the abutting surface. The gasket which is deformable can compensate the tolerance to some extent, which makes the mounting more convenient. Moreover, the connecting member is provided with the gasket groove provided around the first axis, and the gasket is arranged in the gasket groove, thereby realizing mounting and preliminary positioning of the gasket. In this way, the sleeving member can directly abut against the abutting surface when being sleeved on the snap-fit member and the connecting member. The connecting member is suitable to be connected with the mounting member, and the mounting member is provided with the water through channel communicating with the water passing channel.
8. In the eighth solution and preferred embodiments thereof, the connecting member of the water outlet device is provided with the water passing channel, and the sleeving member is provided with the water outlet channel communicating with the water passing channel, thereby completing the communication of water paths.
9. In the ninth solution and preferred embodiments, the connecting member is provided with the sealing groove, and the sealing ring is arranged in the sealing groove, thereby completing the preliminary assembly. The sleeving member is sleeved on the connecting member, and the inner and outer rings of the sealing ring respectively abut against the wall of the sealing groove and the sleeving member. In this way, water cannot flow out via the clearance between the connecting member and the sleeving member.
10. In the tenth solution and preferred embodiments, the water outlet device includes the temperature valve and the switch valve. The mounting member is further provided with the cold water channel, the hot water channel, the first valve cavity and the second valve cavity. The first valve cavity communicates with the cold water channel, the hot water channel and the second valve cavity. The second valve cavity communicates with the water through channel. The temperature valve is detachably arranged in the first valve cavity. The two water inlet ends of the temperature valve respectively communicate with the cold water channel and the hot water channel, and the water outlet end of the temperature valve communicates with the water inlet end of the switch valve. The switch valve is detachably arranged in the second valve cavity and is suitable to change the water passing flow rate of the water through channel, thereby realizing the functions such as temperature regulation, opening and closing of water paths and water flow rate regulation. The temperature valve is detachably arranged in the first valve cavity, and the switch valve is detachably arranged in the second valve cavity, so that the user can choose to use either the temperature valve or the switch valve, which improves the user experience. The temperature valve is one of a mechanical temperature regulating valve core, a thermostatic valve core or an ordinary ceramic valve core, which depends on the user needs. The mounting member is further provided with the lower water outlet hole. The lower water outlet hole communicates with the second valve cavity, and the switch valve is suitable to change the water passing flow rate of the water through channel and the lower water outlet hole. By adding the lower water outlet hole, a water outlet function is added.
11. In the eleventh solution and preferred embodiments thereof, in the prior art, there are generally two processes: an auxiliary hole process and a splicing process. In the auxiliary hole process, the inner cavity of the faucet body generally includes a water passageway and auxiliary passageways communicating with each other. The water passageway is used for guiding the flow of water. The outer end port of the water passageway is used for communicating with a water tube or a water outlet assembly. The auxiliary passageways function to assist in forming during the production process. When the faucet body is formed and subjected to core pulling, plugs are required to block the outer end ports of the auxiliary passageways. In the splicing process, two bodies are spliced and then injection-molded for a second time, or connected by metal fasteners, which increases the material cost, processing cost and assembly cost. In cold winter, water sealed in the inner cavity of the faucet body may freeze due to the low temperature and form an ice-water mixture. During freezing, the expansion force generated by the volume expansion may easily cause the plugs and weak spots of the splices of the faucet body to burst.
   In this embodiment, the mounting member is integrally injection-molded. The first valve cavity has the opening on one side of the mounting member, and the opening direction of the first valve cavity is perpendicular to the first axis. The second valve cavity has the opening on one side of the mounting member, and the opening direction of the second valve cavity is perpendicular to the first axis and the opening direction of the first valve cavity. The first valve cavity and the second valve cavity each has only one opening, and the opening directions are perpendicular to each other. Thus, the first valve cavity and the second valve cavity can be formed by unidirectional core pulling. The water passageway is formed inside the first valve cavity, which shortens the injection molding cycle and facilitates the manufacture.
12. In the twelfth solution and preferred embodiments thereof, the housing is provided with the inner cavity, and the hot water channel of the mounting member is arranged in the inner cavity, which prevents the hot water channel from directly contacting and hurting the user. There is the clearance between the outer wall of the hot water channel and the inner cavity. The clearance can dissipate heat so as to reduce the heat of the hot water channel being transferred to the housing, thus preventing the housing becoming hot and scalding the user.
13. In the thirteenth solution and preferred embodiments thereof, the sleeving member includes the fixing member, the first member and the second member. The second member is suitable to slide relative to the first member along the vertical direction. The first member and the second member are suitable to jointly form the water outlet channel, and the water outlet end of the water outlet channel is located at the second member, so that the height of the water outlet end of the water outlet channel can be adjusted, which is convenient for the user. The fixing member is suitable to act on the first member and the second member to keep the second member fixed relative to the first member, so that the second member can be kept fixed relative to the first member when the adjustment is completed.
14. In the fourteenth solution and preferred embodiments thereof, the fixing member includes the fitting member and the threaded member, and the first member is provided with an insertion hole for the insertion of the second member. During the insertion, there is the first gap between the wall of the insertion hole and the outer wall of the second member. The opening end of the insertion hole and/or the fitting member is provided with the slope such that the fitting member can easily enter or exit from the first gap by means of the slope fit.
   The threaded member is provided with the pushing portion and suitable to be in threaded connection with the outer wall of the first member. The pushing portion is suitable to push against the side of the fitting member facing away from the first member when the threaded member is being threadedly connected to the first member, such that the fitting member gradually extends into the insertion hole and enters the first gap. As the threaded member 332 goes deeper, the part of the fitting member inserted into the insertion hole becomes larger, the contact area between the fitting member 331 and the first member and the wall of the insertion hole becomes larger, and the friction becomes larger. In this case, as long as the threaded member does not become loosened, the height of the water outlet end of the water outlet channel can be kept unchanged. When the threaded member retreats, the pushing portion is away from the insertion hole, and the fitting member could exit from the first gap by means of its own elasticity, so that the friction becomes smaller, which is convenient for the second member to slide. Moreover, since the fitting member is elastic, the fitting member also has a sealing function while blocking the first gap, thereby preventing the water from leaking from the first gap.
15. In the fifteenth solution and preferred embodiments thereof, the connecting member is suitable to be in threaded connection with the mounting member, thereby realizing the assembly.

### BRIEF DESCRIPTION OF THE DRAWINGS

In order to more clearly illustrate the technical solutions of the embodiments of the present disclosure, the following briefly introduces the drawings that need to be used in the description of the embodiments. Clearly, the drawings in the following description are some embodiments of the present disclosure. Those of ordinary skill in the art can also obtain other drawings based on these drawings on the premise of not making creative efforts.
FIG. 1 is a three-dimensional view of a water outlet device in a first embodiment;
FIG. 2 is a schematic structural view of the water outlet device in the first embodiment;
FIG. 3 is an exploded view of the water outlet device in the first embodiment;
FIG. 4 is a three-dimensional assembly view of a connecting member and a mounting member in the first embodiment;
FIG. 5 is an enlarged view of the marked portion in FIG. 3;
FIG. 6 is a sectional view of FIG. 5 taken along line A-A;
FIG. 7 is a three-dimensional view of the connecting member in the first embodiment;
FIG. 8 is a three-dimensional view of a snap-fit member in the first embodiment;
FIG. 9 is a schematic structural view of a sleeving member in the first embodiment;
FIG. 10 is a schematic structural view of the mounting member in the first embodiment;
FIG. 11 is a front view of the water outlet device in the first embodiment;
FIG. 12 is a sectional view of FIG. 11 taken along line B-B;
FIG. 13 is a top view of the water outlet device in the first embodiment;
FIG. 14 is a sectional view of FIG. 13 taken along line B-B;
FIG. 15 is a partial exploded view of the first water outlet device in the first embodiment;
FIG. 16 is a partial exploded view of the second water outlet device in the first embodiment; and
FIG. 17 is a partial exploded view of the third water outlet device in the first embodiment.

### Description of main reference signs:

connecting member 1; annular groove 11, first rotation-stopping portion 111; rotation-stopping groove 1111; water passing channel 12, sealing groove 13, gasket groove 14; threaded section 15; snap-fit member 2; deformation hole 21; avoidance hole 22; bulge 23; second rotation-stopping portion 24; rotation-stopping protrusion 241; sleeving member 3; snap-fit hole 31; water outlet channel 32; fixing member 33, fitting member 331; threaded member 332; pushing portion 3321; first member 34; insertion hole 341; second member 35; first gap 36; mounting member 4; water through channel 41; cold water channel 42, hot water channel 43, first valve cavity 44; second valve cavity 45; lower water outlet hole 46; gasket 5; abutting surface 51; sealing ring 6; first direction 7; first axis 8; temperature valve 91; valve body 911; valve seat 912; switch valve 92; housing 93

### DETAILED DESCRIPTION

The following will clearly and completely describe the technical solutions in the embodiments of the present disclosure with reference to the drawings in the embodiments of the present disclosure. Clearly, the described embodiments are preferred embodiments of the disclosure and should not be seen as excluding other embodiments. Based on the embodiments of the present disclosure, all other embodiments obtained by persons of ordinary skill in the art without creative efforts fall within the protection scope of the present disclosure.

In the claims, specification and drawings of the present disclosure, unless otherwise clearly defined, the terms "first", "second" or "third" are used to distinguish different objects, not for describing a specific order.

In the claims, specification and drawings of the present disclosure, unless otherwise clearly defined, orientation words such as the terms "center", "transverse", "longitudinal", "horizontal", "vertical", "top" , "bottom", "inner", "outer", "up", "down", "front", "back", "left", "right", "clockwise", "counterclockwise" and indicating other directions or positional relationship are used to describe the orientation and positional relationship shown in the drawings, and are only for the convenience of describing the present disclosure and simplifying the description, rather than indicating or implying that the referred device or element must have a specific orientation or be constructed and operated in a specific orientation, so it should not be construed as limiting the specific protection scope of the present disclosure.

Unless otherwise clearly defined in the claims, specification, and the above-mentioned drawings of the disclosure, if the term "fixedly connected" or "fixed connection" is used, it should be understood in a broad sense, that is, any connection method without displacement relationship and relative rotation relationship between the two, that is, including non-removable fixed connection, removably fixed connection, connected as a whole, and fixed connection through other devices or components.

In the claims, specification and drawings of the present disclosure, if the terms "comprising", "having" and their variants are used, it is intended to mean "including but not limited to".

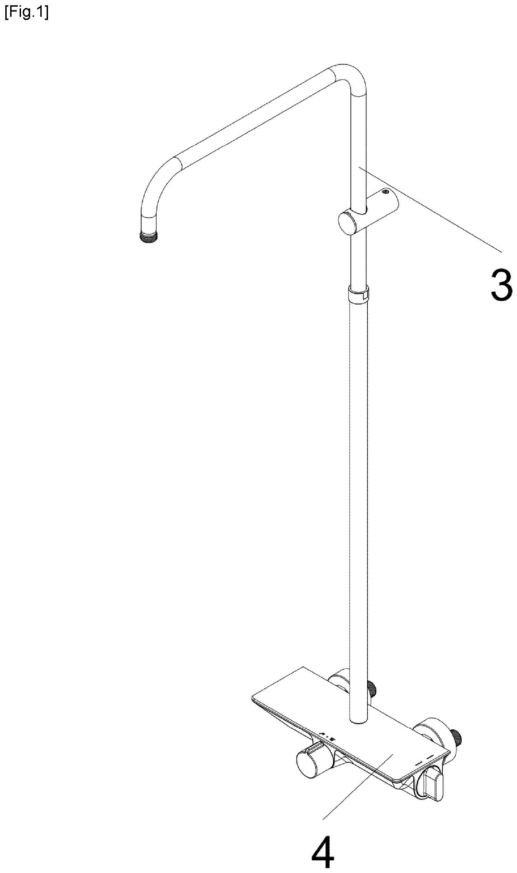

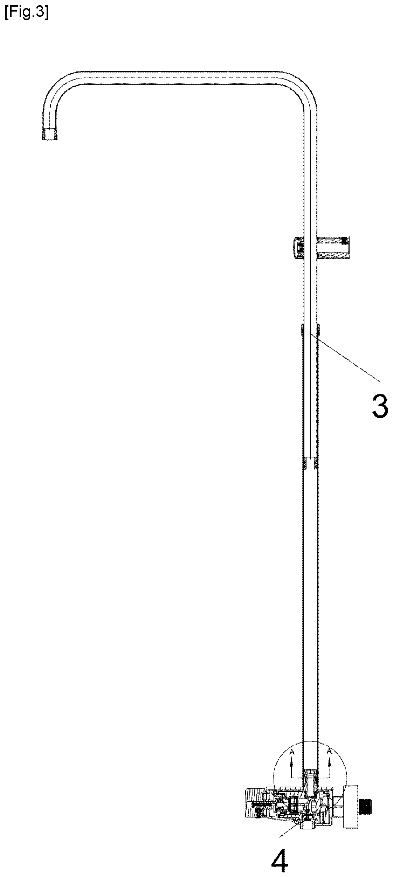

Referring to FIG. 1 to FIG. 8, a water outlet device includes a connecting structure, a sealing ring 6, a temperature valve 91, a switch valve 92 and a housing 93.

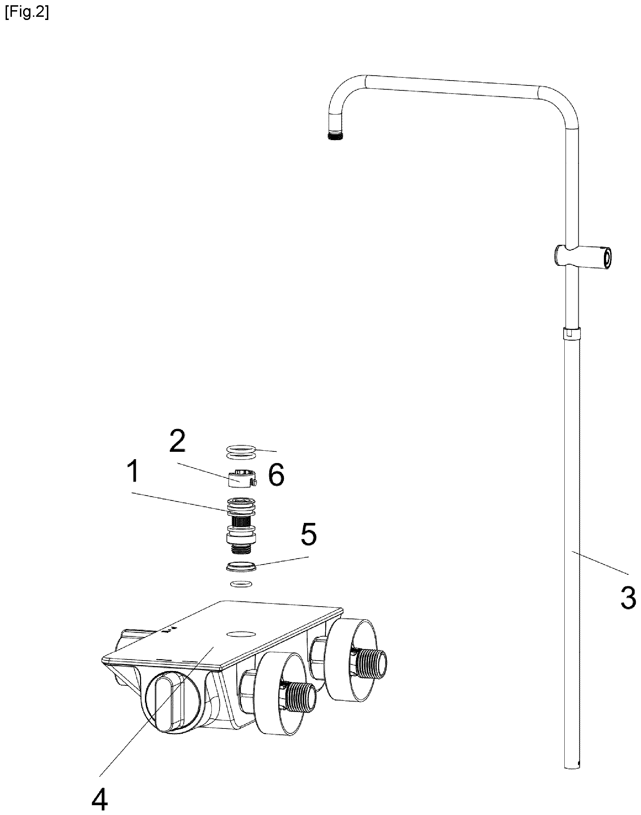

Referring to FIG. 2, the connecting structure includes a connecting member 1, a snap-fit member 2, a sleeving member 3, a mounting member 4 and a gasket 5.

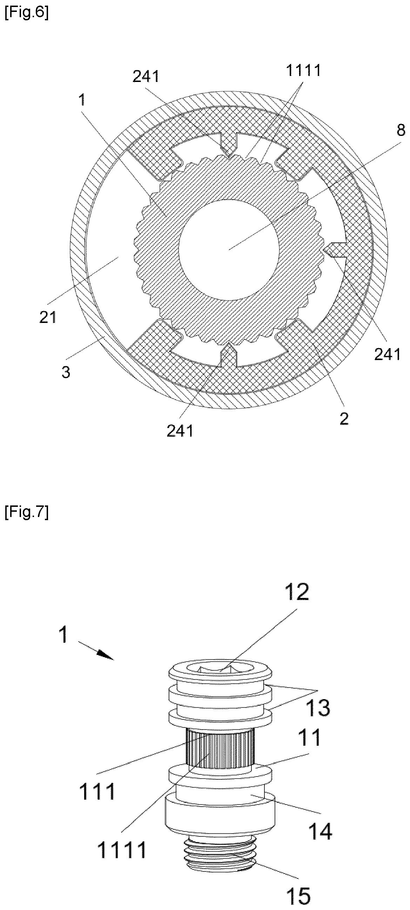

Referring to FIG. 7, the connecting member 1 is substantially rod-shaped. The connecting member 1 is provided with an annular groove 11, a water passing channel 12, a sealing groove 13, a gasket groove 14 and a threaded section 15.

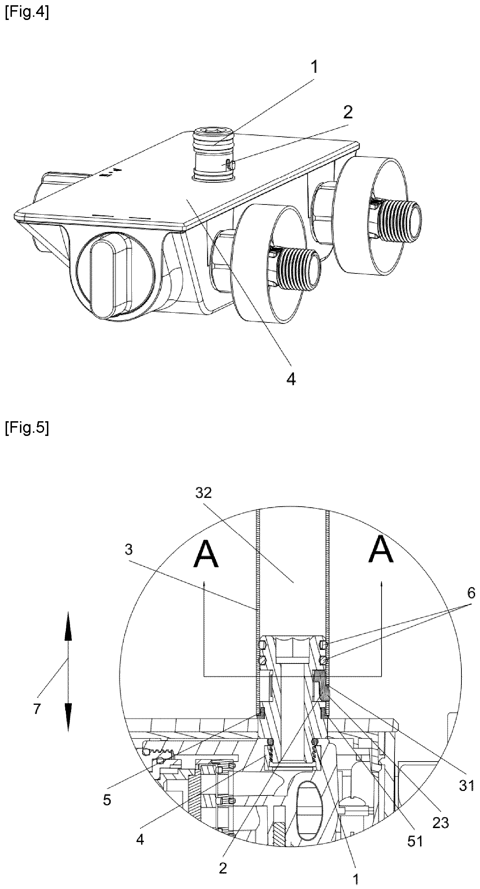

The water passing channel 12 extends along a first direction 7 and passes through the connecting member 1. The first direction 7 is the up-down direction as shown in FIG. 5. The sealing groove 13, the annular groove 11, the gasket groove 14 and the threaded section 15 are sequentially arranged along the first direction 7. The sealing groove 13 is located at the uppermost end.

The sealing groove 13 is ring-shaped, is provided around a first axis 8 and has an opening in a sidewall of the connecting member 1. The sealing groove 13 is suitable to accommodate and support the sealing ring 6. In this embodiment, there are two sealing grooves 13. The annular groove 11 is ring-shaped. The annular groove 11 has an opening in the sidewall of the connecting member 1 and is provided around the first axis 8. A sidewall of the annular groove 11 facing the opening is provided with a first rotation-stopping portion 111. In this embodiment, the first rotation-stopping portion 111 includes a plurality of rotation-stopping grooves 1111 extending along a direction (i.e., the first direction 7) parallel with the first axis 8. Each of the rotation-stopping grooves 1111 is continuously provided around the first axis 8. The gasket groove 14 is ring-shaped. The gasket groove 14 has an opening in the sidewall of the connecting member 1 and is provided around the first axis 8. The gasket groove 14 is suitable to accommodate and support the gasket 5 . The gasket 5 is arranged in the gasket groove 14 and provided with an abutting surface 51 facing the sleeving member 3. The threaded section 15 is suitable to be in threaded connection with the mounting member 4.

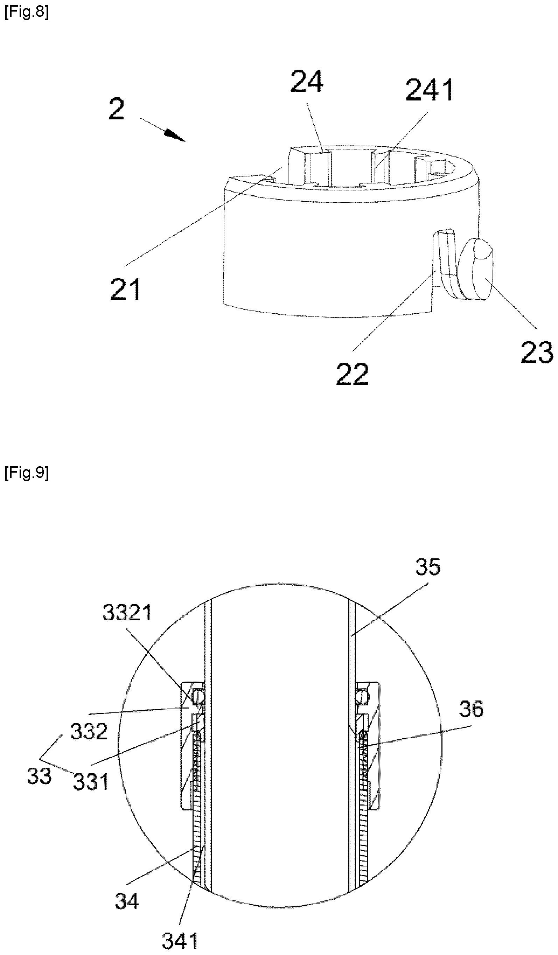

Referring to FIG. 8, the snap-fit member 2 is substantially C-shaped in a projection plane perpendicular to the first direction 7. Specifically, the snap-fit member 2 is provided with a deformation hole 21 along a radial direction of the snap-fit member 2. The deformation hole 21 is suitable to expand such that the snap-fit member 2 is suitable to be arranged in the annular groove 11 along a radial direction of the connecting member 1, and the deformation hole 21 is suitable to contract so as to complete the mounting of the snap-fit member 2 and the annular groove 11. The snap-fit member 2, when contracted, abuts against the connecting member 1 along the radial direction of the connecting member 1 so as to limit the position of the connecting member 1, so that the snap-fit member 2 cannot be detached along the radial direction of the connecting member 1 when the deformation hole 21 is in an unexpanded state. Moreover, after the mounting is completed, the relative position between the snap-fit member 2 and the annular groove 11 along the first direction 7 is limited. In this embodiment, upper and lower ends of the snap-fit member 2 along the first direction 7 respective abut against upper and lower sidewalls of the annular groove 11, thereby realizing position-limiting.

The snap-fit member 2 is further provided with an avoidance hole 22 and a bulge 23, and the avoidance hole 22 passes through the snap-fit member 2 along the radial direction of the snap-fit member 2. One end of the bulge 23 is connected with a wall of the avoidance hole 22, and a free end of the bulge 23 protrudes along the radial direction in a way away from the center of the snap-fit member 2. In this embodiment, an upper end of the bulge 23 is connected with the wall of the avoidance hole 22, so that the free end of the bulge 23 is a cantilever relative to the avoidance hole 22 so that the bulge 23 can deform along the radial direction of the snap-fit member 2.

The snap-fit member 2 is further provided with a second rotation-stopping portion 24. The second rotation-stopping portion 24 is arranged on an inner wall (a surface facing the bottom of the annular groove 11) of the snap-fit member 2. The second rotation-stopping portion 24 is suitable to be in a rotation-stopping fit with the first rotation-stopping portion 111. The second rotation-stopping portion 24 is provided with at least one rotation-stopping protrusion 241. The rotation-stopping protrusion 241 is suitable to enter or exit from each of the rotation-stopping grooves 1111. At least one of the rotation-stopping groove 1111 and the rotation-stopping protrusion 241 is provided with a guiding slope such that the rotation-stopping protrusion 241 could exit from the rotation-stopping groove 1111. In this embodiment, the deformation hole 21 is suitable to expand so as to allow the rotation-stopping protrusion 241 to exit from the rotation-stopping groove 1111.

Referring to FIG. 5, the sleeving member 3 is sleeved on the snap-fit member 2 and the connecting member 1. The sleeving member 3 is provided with a snap-fit hole 31 and a water outlet channel 32. When the sleeving member 3 is sleeved on the snap-fit member 2 along the first direction 7, the free end of the bulge 23 extends into the snap-fit hole 31 and is in a snap fit with the snap-fit hole 31, thereby completing the assembly. At this moment, the inner wall of the sleeving member 3 prevents the snap-fit member 2 from deforming, i.e., the deformation hole 21 cannot expand. The sleeving member 3 is sleeved on the connecting member 1, such that inner and outer rings of the sealing ring 6 respectively abut against the wall of the sealing groove 13 and the sleeving member 3 and the water outlet channel 32 communicates with the water passing channel 12. When the assembly is completed, the sleeving member 3 abuts against the abutting surface 51.

Referring to FIG. 9, in order to make the height of the sleeving member 3 be adjustable, the sleeving member 3 includes a fixing member 33, a first member 34 and a second member 35. The first member 34 is suitable to be sleeved on the snap-fit member 2 and the connecting member 1 and is provided with the snap-fit hole 31. The second member 35 is suitable to slide relative to the first member 34 along the vertical direction. The fixing member 33 is suitable to act on the first member 34 and the second member 35 to keep the second member 35 fixed relative to the first member 34. The first member 34 and the second member 35 are suitable to jointly form the water outlet channel 32.

In this embodiment, preferably, the fixing member 33 includes a fitting member 331 and a threaded member 332. The first member 34 is provided with an insertion hole 341 for the insertion of the second member 35. During the insertion, there is a first gap 36 between a wall of the insertion hole 341 and an outer wall of the second member 35. An opening end of the insertion hole 341 and/or the fitting member 331 is provided with a slope such that the fitting member 331could be fitted with the insertion hole 341 through the slope, and thus, the fitting member 331 could enter or exit from the first gap 36 by means of the slope fit. In this embodiment, both the opening end of the insertion hole 341 and the fitting member 331 are provided with a slope. The threaded member 332 is provided with a pushing portion 3321 and could be in threaded connection with an outer wall of the first member 34. The pushing portion 3321 pushes against a side of the fitting member 331 facing away from the first member 34 when the threaded member 332 is being threadedly connected to the first member 34, such that the fitting member 331 gradually extends into the insertion hole 341 and enters the first gap 36. As the threaded member 332 goes deeper, the part of the fitting member 331 inserted into the insertion hole 341 becomes larger, the contact area between the fitting member 331 and the first member 34 and the wall of the insertion hole 341 becomes larger, and the friction becomes larger. In this case, as long as the threaded member 332 does not become loosened, the height of the water outlet end of the water outlet channel can be kept unchanged. When the threaded member 332 retreats, the pushing portion 3321 is away from the insertion hole 341, and the fitting member 331 could exit from the first gap 36 by means of its own elasticity, thus decreasing the friction and facilitating the second member 35 to slide.

The threaded member 332 is further provided with a sealing ring groove for accommodating the sealing ring 6. When the mounting is completed, the inner and outer rings of the sealing ring 6 respectively abut against the outer wall of the second member 35 and the bottom of the sealing ring groove.

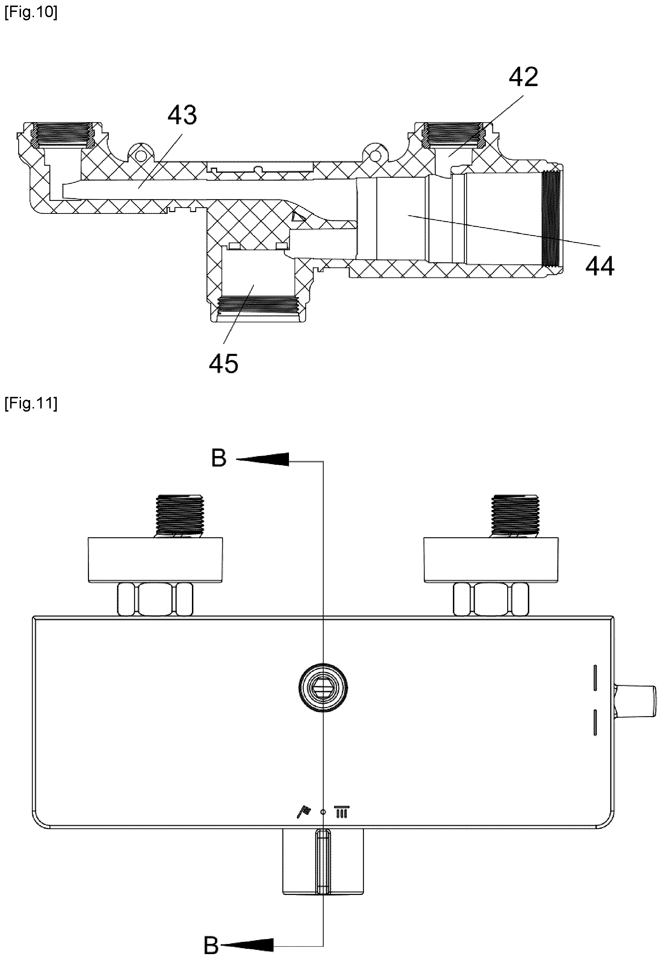

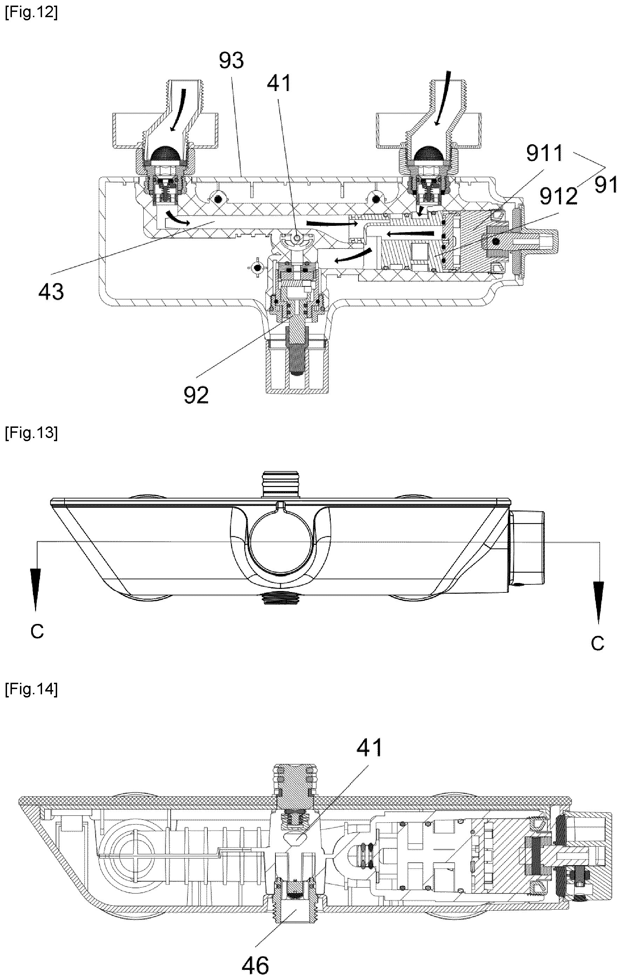

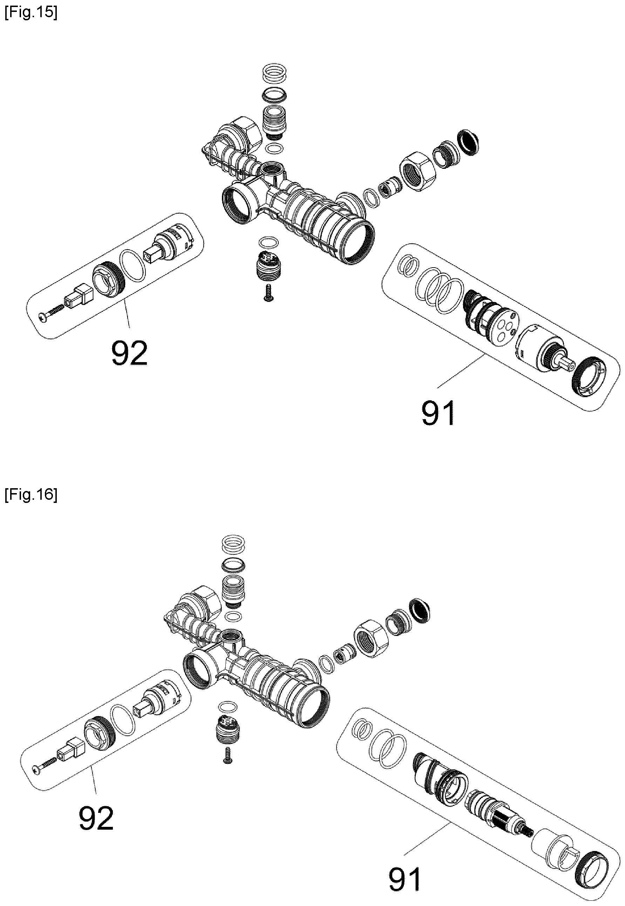

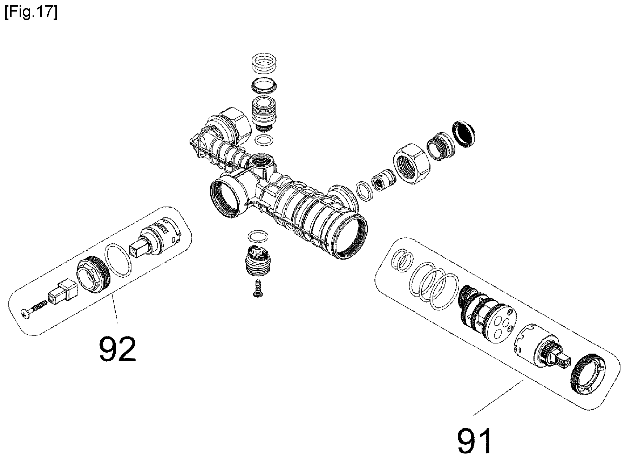

Referring to FIG. 5 and FIG. 10 to FIG. 14, the mounting member 4 is a water outlet core. The mounting member 4 is provided with a water through channel 41. The mounting member 4 is detachably connected with the connecting member 1, so that the water through channel 41 communicates with a water inlet end of the water passing channel 12. The mounting member 4 is in threaded connection with the threaded section 15 of the connecting member 1, so that water paths in the mounting member 4 and the connecting member 1 communicate with each other. Referring to FIG. 10, the mounting member 4 is integrally injection-molded. The mounting member 4 is further provided with a cold water channel 42, a hot water channel 43, a first valve cavity 44 and a second valve cavity 45. The first valve cavity 44 communicates with the cold water channel 42, the hot water channel 43 and the second valve cavity 45. The first valve cavity 44 has an opening on one side of the mounting member 4, and an opening direction of the first valve cavity is perpendicular to the first axis 8. The second valve cavity 45 communicates with the water through channel 41. The second valve cavity 45 has an opening on one side of the mounting member 4, and an opening direction of the second valve cavity is perpendicular to the first axis 8 and the opening direction of the first valve cavity 44. Referring to FIG. 12, the temperature valve 91 is detachably arranged in the first valve cavity 44. Two water inlet ends of the temperature valve 91 respectively communicate with the cold water channel 42 and the hot water channel 43, and a water outlet end of the temperature valve 91 communicates with a water inlet end of the switch valve 92. The switch valve 92 is detachably arranged in the second valve cavity 45 and is suitable to control opening or closing of the water through channel 41. The temperature valve 91 is one of a mechanical temperature regulating valve core, a thermostatic valve core or an ordinary ceramic valve core. The temperature valve 91 includes a valve body 911 and a valve seat 912. The valve body 911 is adapted to the water path by means of the valve seat 912. Referring to FIG. 14, the mounting member 4 is further provided with a lower water outlet hole 46. The lower water outlet hole 46 communicates with the second valve cavity 45, and the switch valve 92 could change a water passing flow rate of the water through channel 41 and that of the lower water outlet hole 46. By adding the lower water outlet hole 46, a water outlet function is added. Referring to FIG. 15, elements such as the mechanical valve seat and the mechanical temperature regulating valve are combined to form a shower faucet capable of switching at the front (closed in the middle) and capable of temperature regulation on the right side. Referring to FIG. 16, elements such as the thermostatic valve seat and the thermostatic valve core are combined to form a thermostatic shower faucet capable of switching at the front (closed in the middle) and capable of temperature regulation on the right side. Referring to FIG. 17, elements such as the mechanical valve seat and the ceramic valve core are combined to form a thermostatic shower faucet capable of switching at the front (closed in the middle) and capable of temperature regulation on the right side.

Referring to FIG. 12, the housing 93 is provided with an inner cavity. The hot water channel 43 of the mounting member 4 is arranged in the inner cavity, and there is a clearance between an outer wall of the hot water channel 43 and the inner cavity.

During mounting, the connecting member 1 is threadedly connected with the mounting member 4 first, as shown in FIG. 4. The deformation hole 21 of the snap-fit member 2 is made to expand so as to be sleeved on the connecting member 1, and then the position of the bulge 23 of the snap-fit member 2 is adjusted. In this embodiment, the bulge 23 is located at the rear side after the adjustment so as to face away from the water outlet end of the sleeving member 3, which is more appealing in appearance. The sleeving member 3 is sleeved onto the snap-fit member 2 and the connecting member 1. During the sleeving process, the sleeving member 3 abuts against the bulge 23, such that the bulge 23 is deforming inward (the bulge 23 may be deformed by means of a slope fit) until the sleeving process is completed. The bulge 23 is aligned to the snap-fit hole 31. The bulge 23 springs back outward and extends into the snap-fit hole 31 so as to be in a snap fit with the snap-fit hole 31. When the mounting is completed, due to the rotation-stopping fit between the first rotation-stopping portion 111 and the second rotation-stopping portion 24, the sleeving member 3 prevents the deformation hole 21 of the snap-fit member 2 from expanding, so the connecting member 1 cannot rotate relative to the snap-fit member 2. Moreover, due to the fit between the bulge 23 and the snap-fit hole 31, the sleeving member 3 cannot easily rotate relative to the snap-fit member 2. Furthermore, due to the fit between the bulge 23 and the snap-fit hole 31, the sleeving member 3 cannot easily move relative to the snap-fit member 2 along the first direction 7; and the position of the snap-fit member 2 is limited relative to the connecting member 1 along the first direction 7, so the snap-fit member 2 cannot sway along the first direction 7.

Compared with the prior art, this embodiment has the following beneficial effects:
In an exemplary embodiment, the connecting structure includes the connecting member 1, the snap-fit member 2 and the sleeving member 3. The connecting member 1 is provided with the annular groove 11 having the opening in the sidewall of the connecting member 1 and provided around the first axis 8, and the snap-fit member 2 is suitable to mounted in and limited to the annular groove 11 along the first direction 7, such that the snap-fit member 2 cannot move relative to the connecting member 1 along the first direction 7. The sidewall of the annular groove 11 facing the opening is provided with the first rotation-stopping portion 111. The inner wall of the snap-fit member 2 is provided with the second rotation-stopping portion 24, and the second rotation-stopping portion 24 is suitable to be in a rotation-stopping fit with the first rotation-stopping portion 111, thereby preventing the snap-fit member 2 from rotating relative to the connecting member 1 around the axis extending along the first direction 7. The sleeving member 3 is sleeved on the snap-fit member 2 and the connecting member 1, and provided with a snap-fit hole 31, and the outer wall of the snap-fit member 2 is provided with the bulge 23. The bulge 23 is suitable to deform along the radial direction of the snap-fit member 2 so as to be fitted with the snap-fit hole 31, and the bulge 23 is suitable to extend into the snap-fit hole 23 such that the snap-fit hole 31 is in a snap fit with the bulge 23, so that the sleeving member 3 cannot easily rotate relative to the snap-fit member 2 or sway along the first direction 7. When the assembly is completed, in a case that the sleeving member, the snap-fit member and the connecting member are in normal use, there is no relative movement, thereby ensuring the stability during use. In this way, the user can realize the assembly and disassembly merely with hands and a screwdriver is unneeded, which is convenient. During mounting, the sleeving member 3 is sleeved on the snap-fit member 2 and the connecting member 1 such that the bulge 23 deforms inward, and the bulge 23, when being aligned to the snap-fit hole 31, springs back outward and extends into the snap-fit hole 31 so as to be in a snap fit with the snap-fit hole 31.

In an exemplary embodiment, the connecting member 1 is provided with the threaded section suitable to be in threaded connection with an external object (such as the mounting member 4), so as to realize the mounting. If the first rotation-stopping portion 111 or the second rotation-stopping portion 24 includes only one rotation-stopping structure, such as only one rotation-stopping groove 1111 or only one rotation-stopping protrusion 241, then when the assembly of the connecting member 1 and the external object is completed, the first rotation-stopping portion 111 may possibly be at a position that the user does not desire, such that the positions of the snap-fit member 2 and the snap-fit hole 31 also change accordingly, which may affect other needs of the user such as the aesthetic needs. In this embodiment, the first rotation-stopping portion 111 includes the plurality of rotation-stopping grooves 1111 extending along the direction parallel with the first axis 8, and each of the rotation-stopping grooves 1111 is provided around the first axis 8. The second rotation-stopping portion 24 is provided with the at least one rotation-stopping protrusion 241. The rotation-stopping protrusion 241 could enter or exit from each of the rotation-stopping grooves 1111. Due to the arrangement of the multi-stage rotation-stopping structure, the user can adjust the mounting position of the snap-fit member 2 appropriately so as to have a greater degree of freedom in mounting. The rotation-stopping grooves 1111 are provided at intervals, so the structure is simpler. The rotation-stopping grooves 1111 are provided continuously, which compared with the rotation-stopping grooves 1111 provided at intervals, provides a wider adjustment range, thereby facilitating the adjustment of the user.

In an exemplary embodiment, at least one of the rotation-stopping groove 1111 and the rotation-stopping protrusion 241 is provided with the guiding slope so that the rotation-stopping protrusion 241 could exit from or enter the rotation-stopping groove 1111 when the snap-fit member 2 is suitable to rotate around the first axis 8. In this way, the rotation-stopping protrusion 241 can exit from or enter the rotation-stopping groove 1111 by rotating the snap-fit member 2, and the position of the bulge 23 can be adjusted without detaching the snap-fit member 2 from the connecting member 1 and reinstalling the snap-fit member to the connecting member 1, which is convenient to operate.

In an exemplary embodiment, the snap-fit member 2 is provided with the deformation hole 21 along the radial direction thereof, and the deformation hole 21 could expand such that the snap-fit member 2 is suitable to be arranged in the annular groove 11, and the deformation hole 21 is suitable to contract so as to complete the mounting of the snap-fit member 2 and the annular groove 11. In this way, it is easy to mount the snap-fit member 2 and limit the relative position of the snap-fit member 2 and the annular groove 11 along the first direction 7. The sleeving member 3 is sleeved on the snap-fit member 2 and prevents the deformation hole 21 from expanding, thereby preventing the deformation hole 21 of the snap-fit member 2 from expanding incidentally and thus preventing the snap-fit member 2 from being separated from the connecting member 1.

In an exemplary embodiment, the snap-fit member 2 is suitable to rotate around the first axis 8 such that the rotation-stopping protrusion 241 could exit from or enter the rotation-stopping groove 1111. In this case, if the snap-fit member 2 is ring-shaped without the deformation hole 21, it is required to apply a large force to make the rotation-stopping protrusion 241 deform to exit from the rotation-stopping groove 1111. In this embodiment, due to the presence of the deformation hole 21, when the rotation-stopping protrusion 241 exits from the rotation-stopping groove 1111, the deformation hole 21 expands, so that the rotation-stopping protrusion 241 could exit from the rotation-stopping groove 1111 by applying a small force, which is convenient for adjustment.

In an exemplary embodiment, the snap-fit member 2 is provided with the avoidance hole 22, and one end of the bulge 23 is connected with the wall of the avoidance hole 22. The free end of the bulge 23 is suitable to be in a snap fit with the snap-fit hole 31 such that the free end of the bulge 23 is a cantilever relative to the avoidance hole 22, which makes the deformation of the bulge 23 easier.

In an exemplary embodiment, if the bottom surface of the sleeving member 3 contacts a hard material in the process of sleeving the sleeving member 3, the sleeving member 3 may interfere with the hard material during mounting due to the fabrication tolerance, which makes the bulge 23 incapable of being perfectly fitted with the snap-fit hole 31. In this embodiment, the gasket 5 provided with the abutting surface 51 is arranged, and the sleeving member 3 is sleeved on the snap-fit member 2 and abuts against the abutting surface 51. The gasket 5 which is deformable can compensate the tolerance to some extent, which makes the mounting more convenient. Moreover, the connecting member 1 is provided with the gasket groove 14 provided around the first axis 8, and the gasket 5 is arranged in the gasket groove 14, thereby realizing mounting and preliminary positioning of the gasket 5. In this way, the sleeving member 3 can directly abut against the abutting surface 51 when being sleeved on the snap-fit member 2 and the connecting member 1.

In an exemplary embodiment, the connecting member 1 of the water outlet device is provided with the water passing channel 12, and the sleeving member 3 is provided with the water outlet channel 32 communicating with the water passing channel 12, thereby completing the communication of water paths. The connecting member 1 is suitable to be connected with the mounting member 4, and the mounting member 4 is provided with the water through channel 41 communicating with the water passing channel 12.

In an exemplary embodiment, the connecting member 1 is provided with the sealing groove 13, and the sealing ring 6 is arranged in the sealing groove 13, thereby completing the preliminary assembly. The sleeving member 3 is sleeved on the connecting member 1, and the inner and outer rings of the sealing ring 6 respectively abut against the wall of the sealing groove 13 and the sleeving member 3. In this way, water cannot flow out via the clearance between the connecting member 1 and the sleeving member 3.

In an exemplary embodiment, the water outlet device further includes the mounting member 4, the temperature valve 91 and the switch valve 92. The mounting member 4 is provided with the water through channel 41 communicating with the water passing channel 12. The mounting member 4 is further provided with the cold water channel 42, the hot water channel 43, the first valve cavity 44 and the second valve cavity 45. The first valve cavity 44 communicates with the cold water channel 42, the hot water channel 43 and the second valve cavity 45. The second valve cavity 45 communicates with the water through channel 41. The temperature valve 91 is detachably arranged in the first valve cavity 44. The two water inlet ends of the temperature valve 91 respectively communicate with the cold water channel 42 and the hot water channel 43, and the water outlet end of the temperature valve 91 communicates with the water inlet end of the switch valve 92. The switch valve 92 is detachably arranged in the second valve cavity 45 and is suitable to change the water passing flow rate of the water through channel 41, thereby realizing the functions such as temperature regulation, opening and closing of water paths and water flow rate regulation. The temperature valve 91 is detachably arranged in the first valve cavity 44, and the switch valve 92 is detachably arranged in the second valve cavity 45, so that the user can choose to use either the temperature valve 91 or the switch valve 92, which improves the user experience.

In an exemplary embodiment, in the prior art, there are generally two processes: an auxiliary hole process and a splicing process. In the auxiliary hole process, the inner cavity of the faucet body generally includes a water passageway and auxiliary passageways communicating with each other. The water passageway is used for guiding the flow of water. The outer end port of the water passageway is used for communicating with a water tube or a water outlet assembly. The auxiliary passageways function to assist in forming during the production process. When the faucet body is formed and subjected to core pulling, plugs are required to block the outer end ports of the auxiliary passageways. In the splicing process, two bodies are spliced and then injection-molded for a second time, or connected by metal fasteners, which increases the material cost, processing cost and assembly cost. In cold winter, water sealed in the inner cavity of the faucet body may freeze due to the low temperature and form an ice-water mixture. During freezing, the expansion force generated by the volume expansion may easily cause the plugs and weak spots of the splices of the faucet body to burst.

In this embodiment, the mounting member 4 is integrally injection-molded. The first valve cavity 44 has the opening on one side of the mounting member 4, and the opening direction of the first valve cavity 44 is perpendicular to the first axis. The second valve cavity 45 has the opening on one side of the mounting member 4, and the opening direction of the second valve cavity 45 is perpendicular to the first axis and the opening direction of the first valve cavity 44. The first valve cavity 44 and the second valve cavity 45 each has only one opening, and the opening directions are perpendicular to each other. Thus, the first valve cavity 44 and the second valve cavity 45 can be formed by unidirectional core pulling. The water passageway is formed inside the first valve cavity 44, which shortens the injection molding cycle and facilitates the manufacture.

In an exemplary embodiment, the temperature valve 91 is one of a mechanical temperature regulating valve core, a thermostatic valve core or an ordinary ceramic valve core, which depends on the user needs.

In an exemplary embodiment, the housing 93 is provided with the inner cavity, and the hot water channel 43 of the mounting member 4 is arranged in the inner cavity, which prevents the hot water channel 43 from directly contacting and hurting the user. There is the clearance between the outer wall of the hot water channel 43 and the inner cavity. The clearance can dissipate heat so as to reduce the heat of the hot water channel 43 being transferred to the housing 93, thus preventing the housing 93 becoming hot and scalding the user.

In an exemplary embodiment, the sleeving member includes the fixing member 33, the first member 34 and the second member 35. The second member 35 is suitable to slide relative to the first member 34 along the vertical direction. The first member 34 and the second member 35 are suitable to jointly form the water outlet channel 32, and the water outlet end of the water outlet channel 32 is located at the second member 35, so that the height of the water outlet end of the water outlet channel 32 can be adjusted, which is convenient for the user. The fixing member 33 is suitable to act on the first member 34 and the second member 35 to keep the second member 35 fixed relative to the first member 34, so that the second member can be kept fixed relative to the first member when the adjustment is completed.

In an exemplary embodiment, the fixing member 33 includes the fitting member 331 and the threaded member 332. The first member 34 is provided with the insertion hole 341 for the insertion of the second member 35. During the insertion, there is the first gap 36 between the wall of the insertion hole 341 and the outer wall of the second member 35. The opening end of the insertion hole 341 and/or the fitting member 331 is provided with the slope such that the fitting member 331 can easily enter or exit from the first gap 36 by means of the slope fit.

The threaded member 332 is provided with the pushing portion 3321 and suitable to be in threaded connection with the outer wall of the first member 34. The pushing portion 3321 is suitable to push against the side of the fitting member 331 facing away from the slope when the threaded member 332 is being threadedly connected to the first member 34, such that the fitting member 331 gradually extends into the insertion hole 341 and enters the first gap 36. As the threaded member 332 goes deeper, the part of the fitting member 331 inserted into the insertion hole 341 becomes larger, the contact area between the fitting member 331 and the first member 34 and the wall of the insertion hole 341 becomes larger, and the friction becomes larger. In this case, as long as the threaded member 332 does not become loosened, the height of the water outlet end of the water outlet channel 32 can be kept unchanged. When the threaded member 332 retreats, the pushing portion 3321 is away from the insertion hole 341, and the fitting member 331 could exit from the first gap 36 by means of its own elasticity, so that the friction becomes smaller, which is convenient for the second member 35 to slide. Moreover, since the fitting member 331 is elastic, the fitting member 331 also has a sealing function while blocking the first gap 36, thereby preventing the water from leaking from the first gap 36.

In an exemplary embodiment, the mounting member 4 is further provided with a lower water outlet hole 46. The lower water outlet hole 46 communicates with the second valve cavity 45, and the switch valve 92 is suitable to change the water passing flow rate of the water through channel 41 and the lower water outlet hole 46. By adding the lower water outlet hole 46, a water outlet function is added.

### In other embodiments:

The snap-fit member 2 may also be mounted along the first direction 7, and then a component above and/or below the snap-fit member 2 along the first direction 7 is adopted to abut against and lock the snap-fit member 2 , so that the position of the snap-fit member 2 is limited along the first direction 7. The locking may be realized by screwing.

The separation between the rotation-stopping groove 1111 and the rotation-stopping protrusion 241 may also be realized directly by the elastic deformation of the rotation-stopping protrusion 241 (the rotation-stopping protrusion 241 is made of a flexible material), and the deformation hole 21 is provided only for better deformation. Similarly, the avoidance hole 22 is also provided to make the bulge 23 deform more easily. In other embodiments, the bulge 23 may be fitted with the snap-fit hole 31 by means of the elastic deformation of the bulge 23.

The descriptions of the above specifications and examples are used to explain the scope of protection of the present disclosure, but are not intended to limit the scope of protection of the present disclosure. Through the enlightenment of the present disclosure or the above-mentioned embodiments, those of ordinary skill in the art can obtain the modification, equivalent replacement or other improvements of the embodiments or some of the technical features of the disclosure through logical analysis, reasoning or limited experiments in combination with common knowledge, ordinary technical knowledge in the field and/or related art, and the modification, equivalent replacement or other improvements of the present disclosure shall all be included in the protection scope of the present disclosure.

## Claims

1. A connecting structure, **characterized by** comprising:
a connecting member (1), provided with an annular groove (11) having an opening in a sidewall of the connecting member (1) and being provided around a first axis (8), a sidewall of the annular groove (11) facing the opening being provided with a first rotation-stopping portion (111);
a snap-fit member (2), suitable to be mounted in and limited to the annular groove (11) along a first direction (7), and having an outer wall provided with a bulge (23) and an inner wall provided with a second rotation-stopping portion (24), the second rotation-stopping portion (24) being suitable to be in a rotation-stopping fit with the first rotation-stopping portion (111), and the bulge (23) being suitable to deform along a radial direction of the snap-fit member (2); and
a sleeving member (3), provided with a snap-fit hole (31) and sleeved on the snap-fit member (2) and the connecting member (1) such that the bulge (23) deforms inward, the bulge (23), when being aligned to the snap-fit hole (31), springing back outward and extending into the snap-fit hole (31) when being aligned to the snap-fit hole (31), so as to be in a snap fit with the snap-fit hole (31).

2. The connecting structure according to claim 1, **characterized in that** the connecting member (1) is provided with a threaded section suitable to be in threaded connection with an external object; the first rotation-stopping portion (111) comprises a plurality of rotation-stopping grooves (1111) extending along a direction parallel with the first axis (8), each of the rotation-stopping grooves (1111) being provided around the first axis (8); the second rotation-stopping portion (24) is provided with at least one rotation-stopping protrusion (241), the rotation-stopping protrusion (241) being suitable to enter or exit from each of the rotation-stopping grooves (1111); and the rotation-stopping grooves (1111) are provided continuously or at intervals.

3. The connecting structure according to claim 2, **characterized in that** at least one of the rotation-stopping groove (1111) and the rotation-stopping protrusion (241) is provided with a guiding slope such that the rotation-stopping protrusion (241) could exit from or enter the rotation-stopping groove (1111) when the snap-fit member (2) is suitable to rotate around the first axis (8).

4. The connecting structure according to claim 2 or 3, **characterized in that** the snap-fit member (2) is provided with a deformation hole (21) along the radial direction of the snap-fit member (2), and the deformation hole (21) is suitable to expand such that the snap-fit member (2) is suitable to be arranged in the annular groove (11), and the deformation hole (21) is suitable to contract so as to complete the mounting of the snap-fit member (2) and the annular groove (11); and the sleeving member (3) is sleeved on the snap-fit member (2) and prevents the deformation hole (21) from expanding.

5. The connecting structure according to claim 4, **characterized in that** the snap-fit member (2) is suitable to rotate around the first axis (8) such that the rotation-stopping protrusion (241) could exit from or enter the rotation-stopping groove (1111), and when the rotation-stopping protrusion (241) exits from the rotation-stopping groove (1111), the deformation hole (21) expands.

6. The connecting structure according to claim 1, **characterized in that** the snap-fit member (2) is provided with an avoidance hole (22), and one end of the bulge (23) is connected with a wall of the avoidance hole (22) such that a free end of the bulge (23) is a cantilever relative to the avoidance hole (22), the free end of the bulge (23) being suitable to be in a snap fit with the snap-fit hole (31).

7. The connecting structure according to claim 1, **characterized by** further comprising a gasket (5), wherein the connecting member (1) is provided with a gasket groove (14) provided around the first axis (8), the gasket (5) being arranged in the gasket groove (14) and provided with an abutting surface (51) facing the sleeving member (3), and the sleeving member (3) being sleeved on the snap-fit member (2) and abutting against the abutting surface (51).

8. A water outlet device, **characterized by** comprising a mounting member and the connecting structure according to any of claims 1 to 7, wherein a connecting member (1) is provided with a water passing channel (12), and the sleeving member (3) is provided with a water outlet channel (32) communicating with the water passing channel (12), the connecting member (1) being suitable to be connected with the mounting member (4), and the mounting member (4) being provided with a water through channel (41) communicating with the water passing channel (12).

9. The water outlet device according to claim 8, **characterized by** further comprising a sealing ring (6), wherein the connecting member (1) is provided with a sealing groove (13), and the sealing ring (6) is arranged in the sealing groove (13); and the sleeving member (3) is sleeved on the connecting member (1), and inner and outer rings of the sealing ring (6) respectively abut against a wall of the sealing groove (13) and the sleeving member (3).

10. The water outlet device according to claim 8, **characterized by** comprising a temperature valve (91) and a switch valve (92), wherein the mounting member (4) is further provided with a cold water channel (42), a hot water channel (43), a first valve cavity (44) and a second valve cavity (45), the first valve cavity (44) communicating with the cold water channel (42), the hot water channel (43) and the second valve cavity (45); the second valve cavity (45) communicates with the water through channel (41); the temperature valve (91) is detachably arranged in the first valve cavity (44), two water inlet ends of the temperature valve (91) respectively communicating with the cold water channel (42) and the hot water channel (43), and a water outlet end of the temperature valve (91) communicating with a water inlet end of the switch valve (92); the switch valve (92) is detachably arranged in the second valve cavity (45) and is suitable to change a water passing flow rate of the water through channel (41); the temperature valve (91) is one of a mechanical temperature regulating valve core, a thermostatic valve core or an ordinary ceramic valve core; and the mounting member (4) is further provided with a lower water outlet hole (46), the lower water outlet hole (46) communicating with the second valve cavity (45), and the switch valve (92) being suitable to change a water passaing flow rate of the water through channel (41) and the lower water outlet hole (46).

11. The water outlet device according to claim 10, **characterized in that** the mounting member (4) is integrally injection-molded; the first valve cavity (44) has an opening on one side of the mounting member (4), and an opening direction of the first valve cavity (44) is perpendicular to the first axis (8); and the second valve cavity (45) has an opening on one side of the mounting member (4), and an opening direction of the second valve cavity (45) is perpendicular to the first axis (8) and the opening direction of the first valve cavity (44).

12. The water outlet device according to claim 10, **characterized by** further comprising a housing (93), wherein the housing (93) is provided with an inner cavity, the hot water channel (43) of the mounting member (4) being arranged in the inner cavity, and there being a clearance between an outer wall of the hot water channel (43) and the inner cavity.

13. The water outlet device according to claim 8, **characterized in that** the sleeving member (3) comprises a fixing member (33), a first member (34) and a second member (35), the first member (34) being suitable to be sleeved on a snap-fit member (2) and the connecting member (1) and being provided with a snap-fit hole (31), and the second member (35) being suitable to slide relative to the first member (34) along a vertical direction; the fixing member (33) is suitable to act on the first member (34) and the second member (35) to keep the second member (35) fixed relative to the first member (34); and the first member (34) and the second member (35) are suitable to jointly form the water outlet channel (32), and a water outlet end of the water outlet channel (32) is located at the second member (35).

14. The water outlet device according to claim 13, **characterized in that** the fixing member (33) comprises a fitting member (331) and a threaded member (332), and the first member (34) is provided with an insertion hole (341) for insertion of the second member (35), there being a first gap (36) between a wall of the insertion hole (341) and an outer wall of the second member (35); an opening end of the insertion hole (341) and/or the fitting member (331) is provided with a slope such that the fitting member (331) could be fitted with the insertion hole (341) through the slope, and thus, the fitting member (331) could enter or exit from the first gap (36); the threaded member (332) is provided with a pushing portion (3321) and suitable to be in threaded connection with an outer wall of the first member (34); the pushing portion (3321) is suitable to push against a side of the fitting member (331) facing away from the first member (34) when the threaded member (332) is threadedly connected to the first member (34), such that the fitting member (331) gradually extends into the insertion hole (341) and enters the first gap (36); and when the pushing portion (3321) is away from the insertion hole (341), the fitting member (331) could exit from the first gap (36) by means of its own elasticity.

15. The water outlet device according to claim 9, **characterized in that** the connecting member (1) is suitable to be in threaded connection with the mounting member (4).
